(19) Europäisches Patentamt / European Patent Office / Office européen des brevets

(11) **EP 3 995 816 B1**

(12) **EUROPEAN PATENT SPECIFICATION**

(45) Date of publication and mention
of the grant of the patent:
**19.07.2023 Bulletin 2023/29**

(21) Application number: **21207130.2**

(22) Date of filing: **09.11.2021**

(51) International Patent Classification (IPC):
**G01N 21/47** *(2006.01)*        **G01N 21/55** *(2014.01)*
**G01N 21/57** *(2006.01)*

(52) Cooperative Patent Classification (CPC):
**G01N 21/4785; G01N 21/55;** G01N 21/4738;
G01N 21/57

(54) **A METHOD OF MANUFACTURING A REFERENCE MATERIAL FOR CALIBRATING A LUMINANCE MEASURING DEVICE FOR ROAD PAVEMENTS, CORRESPONDING REFERENCE MATERIAL AND CALIBRATION KIT**

VERFAHREN ZUR HERSTELLUNG EINES REFERENZMATERIALS ZUR KALIBRIERUNG EINES LUMINANZMESSGERÄTES FÜR STRASSENBELÄGE, ZUGEHÖRIGES REFERENZMATERIAL UND KALIBRIERUNGSKIT

PROCÉDÉ DE FABRICATION D'UN MATÉRIAU DE RÉFÉRENCE POUR CALIBRER UN APPAREIL DE MESURE DE LUMINANCE POUR REVÊTEMENTS ROUTIERS, MATÉRIAU DE RÉFÉRENCE CORRESPONDANT ET KIT D'ÉTALONNAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2020 IT 202000026711**

(43) Date of publication of application:
**11.05.2022 Bulletin 2022/19**

(73) Proprietor: **Istituto Nazionale di Ricerca Metrologica
(I.N.RI.M.)
10135 Torino (IT)**

(72) Inventor: **IACOMUSSI, Paola
10135 Torino (TO) (IT)**

(74) Representative: **Crovini, Giorgio
Buzzi, Notaro & Antonielli d'Oulx S.p.A.
Corso Vittorio Emanuele II, 6
10123 Torino (IT)**

(56) References cited:
**US-B1- 10 787 175**

- **BOMMEL ET AL: "Road Surfaces and lighting", JOINT TECHNICAL REPORT CIE/PIARC, XX, XX, vol. 66, 1 January 1984 (1984-01-01), XP002258261,**
- **WHITE GREG: "Managing skid resistance and friction on asphalt runway surfaces", PROCEEDINGS OF THE WORLD CONFERENCE ON PAVEMENT AND ASSET MANAGEMENT, 1 June 2017 (2017-06-01), pages 1-10, XP055822179,**

## Description

Technical field

The description relates to metrological methods to analyze optical properties of the different materials, such as gloss or spatial luminance distribution.

One or more embodiments may be applied to instruments and methods to measure luminance variations and reduced luminance coefficient values of road surfaces, in particular to calibration of instruments.

Technological Background

In order to ensure safety and visibility to all road users, levels of luminance are set or limited for road lighting systems to satisfy.

Luminance is a photometric measure of the luminous intensity per unit area of light traveling in a certain direction.

Parameters useful in designing road lighting systems are discussed for instance in the following documents:

> [1] "Light and lighting-road lighting. part 3: Calculation of performance", Technical report, CEN, 2015, EN 13201-3:2015;
> [2] "Road lighting - Part 5: Energy performance indicators", Technical report, CEN, 2015, EN 13201-5:2015;
> [3] "Light and lighting-road lighting. Part 2: Performance requirements", Technical report, CEN, 2015, EN13201-2:2015.

Specifically, luminance coefficients may be useful in:

- setting energy performance parameters of a lighting installation as a function of spatial luminous intensity of lighting fixture, facilitating to calculate expected road luminance values;
- designing road lighting system to improve road safety conditions at night;
- performing glare evaluation, facilitating to improve safety and comfort during night-time (for instance, in smart cities).

Road surface reflecting behavior may be derived from measurements collected in one or more tabular datasets, knowns as CIE tables (or r-tables) and indicate the ability of the surface to reflect incident light in the direction of the observer. Document [4] "Road surface and road marking reflection characteristics", Technical report, CIE 2001, CIE144:2001 discusses such tabular datasets.

The tabular datasets currently used in road lighting design present tabulated data of luminance coefficient (or reduced luminance coefficient) for given angles of incidence and viewing directions.

Such a solution may present one or more of the following drawbacks for vision performance, optimization and energy consumption of modern lighting installations, for instance:

- document [5] P. Verny, C. Chain, F. Lopez: "Impact of real road photometry on public lighting design", pages CD.ROM, Proc. Of the CIA 26th Session, Bejing, 2007, discusses that properties of current road pavements have progressively changed and show that using the current standards based on available CIE data can lead to errors, as the photometric properties of the road materials can change significantly over time;
- document [6] Gidlund, H., Lindgren, M., Muzet, V., Rossi, G. & Iacomussi, P. (2019) Road Surface Photometric Characterisation and Its Impact on Energy Savings. Coatings journal DOI: 10.3390/coatings9050286 discusses the impact of the use of outdated road surface reflectance data and its impact on energy consumption;
- outdated measurement values may hardly be compatible with new types of luminaires, e.g., using Solid-State Lighting (briefly, SSL), which can have very different (e.g., sharp) luminous intensity distributions;
- lighting engineers and designers may balance unreliable (or unavailable) data employing oversizing or adopt, without preliminary considerations, the same reference data to all lighting situations, possibly leading to reduced energy savings;
- glare evaluation of the dispersed light in the upward direction, for instance to improve visibility of small objects on the road minimizing road luminance level, not only for drivers but also for pedestrians, may hardly be evaluated accurately;
- it may be hardly adapted to take into account the emergence of new types of road material, like the surfaces for road drainage or colored pavements;

Furthermore, document [7] "Recommended system for mesopic photometry based on visual performance", Technical report, the international commission on Illumination CIE, 2010, CIE 191:2011 discusses the importance to take into account also neglected spectral radiance coefficients which is being introduced in some national (UNI, BSI) and international guidelines. For instance, document "The effect of spectral power distribution on lighting for urban and pedestrian areas", technical report, the international commission on Illumination CIE, 2014, CIE 206:2014, is exemplary of such international guidelines.

US10787175B1 discloses a homogeneous diffusive reflective material for calibrating an optical surface condition monitoring system.

Currently available measurement devices for road surface luminance characterization, for instance goniophotometers, may present one or more of the following drawbacks:

- present high costs and be time consuming,
- be available in a limited number of research institutes, almost exclusively in National Metrological Institutes;
- may make it difficult to obtain a clear assessment of photometric and geometrical performances,
- make hardly possible to perform intercomparisons, in particular on luminance coefficient, reliably,
- lack tested or provided traceability of measured data if devices are not belonging to National Metrological Institutes.

At the same time, portable devices for in situ measurements have present limited reliability and traceability to the reference units, as well as a limited range of few angular direction for which they provide data.

Object and summary

An object of one or more embodiments is to contribute in providing such an improved solution.

According to one or more embodiments, that object can be achieved by means of a method having the features set forth in the claims that follow.

A method of manufacturing of a reference material device to measure luminance properties of road pavements may be exemplary of such a method.

One or more embodiments may relate to a corresponding reference material device.

A reference material device configured to measure luminance and reduced luminance coefficients of road surfaces.

One or more embodiments may relate to a corresponding instrument calibration kit.

An instrument calibration kit comprising reference materials may be exemplary of such a system.

One or more embodiments may relate to using such an instrument calibration kit in calibrating a luminance measurement instrument, for instance a portable device for in situ measurement of road surface properties.

One or more embodiments may substitute samples of road surface extracted from a road surface with samples easier to replicate and disseminate, ensuring reliability, repeatability and stability of the calibration objects for luminance measurement.

One or more embodiments may use materials for 3D printing to manufacture Reference Materials (briefly, RMs) devices for measuring road luminance, in particular (reduced) luminance coefficients.

One or more embodiments may provide one or more of the following advantages:

- updated and reliable data on values of luminance parameters,

- possibility to develop and provide new calibration services;
- possibility of using portable instruments, to perform measurements directly on the road,
- providing reliable calibration procedures,
- improved traceability of measurement results and provide adequate uncertainty evaluations,
- facilitating reducing oversize of road light installations, ensuring energy savings while maintaining a safe environment.

One or more embodiments may facilitate use source photometric (or radiometric) properties in place of gonio-photometric properties(KCDB -Key Comparison DataBase of BIPM Bureau International des Poids et Mesures)

One or more embodiments may counter problems with sampling and handing of road surface samples.

One or more embodiments may facilitate having stables and reproducible objects or artefacts to be used as reference materials based on 3D printing.

One or more embodiments may facilitate providing purposely characterized and selected 3D printable materials for the manufacturing of road luminance measurement Reference materials.

One or more embodiments may facilitate adopting new and innovative lighting solutions.

One or more embodiments may facilitate providing road lighting systems with increased energy savings and performances, leading to more efficient and safer roads for drivers and pedestrians.

One or more embodiments may facilitate increasing replacement of old lighting luminaires with more effective SSL luminaires, possibly combined with adaptive system controls, facilitating reaching energy savings up to 70% and reducing public electrical consumption in cities.

One or more embodiments may facilitate increasing road safety, facilitating ensuring to satisfy standard luminance requirement for road users' safety and visibility.

One or more embodiments may facilitate obtaining reliable and traceable values of q and r coefficients in different conditions and with new technologies, such as for instance new road surface materials such as so-called "bright pavements".

One or more embodiments may facilitate the adoption of reference table for reduced luminance coefficient in road lighting design.

One or more embodiments may support National Metrology Institutes (briefly, NMIs) in analyzing road materials properties.

One or more embodiments may facilitate the development of new dedicated portable measuring device to asses spatial reflectance properties of road surfaces (luminance coefficient or reduced luminance coefficient).

As mentioned in the foregoing, the present disclosure provides solutions regarding a method of manufacturing a device for use as reference material in calibrating an instrument to measure luminance of a road surface, the method comprising:

provide a tabular dataset of reflectance values, in particular normalized reflectance values, of road surfaces illuminated by a road luminaire emitting light impinging thereon at an observed point, the light propagating from the road luminaire, in particular from a photometric center of the road luminaire, along a light path so as to determine, as seen from an observation point at a given viewing direction angle $\alpha$ with respect to the road, in particular of 1°:

a) a first incidence angle between the light path and a normal to the road surface; and
b) a second incidence angle between a vertical plane passing for the observation point and the observed point and a vertical plane passing for the observed point and the road luminaire;

selecting a subset of reflectance values from said provided tabular dataset of reflectance values; setting, as a function of the selected reflectance values, geometric parameters of a pattern of prismoid-like formations separated therebetween by channel-like formations, wherein said geometric parameters of the prismoid-like formations are selected so that respective areas projected at said viewing direction angle have values proportional to the values of said subset of reflectance values selected from said provided tabular dataset of reflectance values; manufacturing, in particular by 3d printing, said pattern of prismoid-like formations separated by said channel like-formations onto a support base, in particular quadrangular, having a constant thickness, in particular as a single piece.

In variant embodiments, according to the solution here described said geometric parameters of a pattern comprises parameters selected out of a group of geometric parameters comprising:

a length in a longitudinal direction,
lengths in a transverse direction orthogonal said longitudinal direction,
tilt angles of exposed surfaces with respect to a support base,
width of said channel-like separation.

In variant embodiments, said setting design parameters of said pattern of prismoid-like formations as a function of said selected reflectance values, comprises at least one of:

setting a maximum and a minimum thicknesses of extremities of the prismoid-like formations;

setting a length of the top surface of the prismoid-like formations;
setting transverse tilt angles of the top surfaces;
setting a spatial periodicity gap size.

In variant embodiments, said manufacturing as a single piece said pattern of prismoid-like formations on a support base having a constant thickness comprises manufacturing via additive manufacturing.
In variant embodiments, said manufacturing as a single piece said pattern of prismoid-like formations on a support base having a constant thickness comprises using non-metallic material.
In variant embodiments, said manufacturing as a single piece said pattern of prismoid-like formations on a support base having a constant thickness comprises using thermoplastic materials.
In variant embodiments, it comprises using thermoplastic materials having specific light-reflecting properties selected out of glossy black, matte grey, and matte black plastic coloring.
The present disclosure provides also solutions regarding a device for use as reference material in calibrating an instrument to measure luminance of a road surface, comprising a pattern of prismoid-like formations separated therebetween by channel-like formations, wherein said geometric parameters of the prismoid-like formations are selected so that respective areas projected at a viewing direction angle have values proportional to the values of said subset of reflectance values selected from a provided tabular dataset of reflectance values, manufactured as a single piece onto a support base, in particular quadrangular, having a constant thickness ,

said tabular dataset comprising reflectance values, in particular normalized reflectance values, of road surfaces illuminated by a road luminaire emitting light impinging thereon at an observed point, the light propagating from the road luminaire, in particular from a photometric center of the road luminaire, along a light path so as to determine, as seen from an observation point at a given viewing direction angle $\alpha$ with respect to the road, in particular of 1°:

c) a first incidence angle between the light path and a normal to the road surface; and
d) a second incidence angle between a vertical plane passing for the observation point and the observed point and a vertical plane passing for the observed point and the road luminaire;

said subset of reflectance values being selected from said provided tabular dataset of reflectance values; geometric parameters of a pattern of prismoid-like formations separated therebetween by channel-like formations, wherein said geometric parameters of the prismoid-like formations are selected so that respective areas projected at said viewing direction angle have values proportional to the values of said subset of reflectance values selected from said provided tabular dataset of reflectance values;

said pattern of prismoid-like formations separated by said channel like-formations being manufactured onto a support base, in particular quadrangular, having a constant thickness, said support base and pattern being in particular manufactured as a single piece.

In variant embodiments, the device is manufactured using the method of any of the previous embodiments.

The present disclosure provides also solutions regarding a kit of reference materials configured to calibrate an instrument to measure luminance of a road surface, comprising a plurality of devices manufactured by a method according to any of the previous embodiments, the devices being configured to each present a reflectance value of the subset of reflectance values selected from the provided tabular dataset of reflectance values r.

The claims are an integral part of the technical teaching provided herein with reference to the embodiments.

Brief description of the several views of the drawings

One or more embodiments will now be described, by way of non-limiting example only, with reference to the annexed Figures, wherein:

Figure 1 is a diagram of a road lighting environment;
Figure 2 is a perspective view of a reference material device according to one or more embodiments;
Figure 3 is a front view along arrow III of Figure 2;
Figure 4 is a lateral view along arrow IV of Figure 2;
Figure 5 is a perspective view of a reference material device according to one or more embodiments,
Figure 6 is a front view along arrow VI of Figure 5;
Figure 7 is a lateral view along arrow VII of Figure 5;
Figure 8 is a perspective view of a reference material device according to one or more embodiments,
Figure 9 is a diagram of a method according to one or more embodiments.

Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

Throughout the figures annexed herein, like parts or elements are indicated with like references/numerals and a corresponding description will not be repeated for brevity.

The drawings are in simplified form and are not to precise scale.

As discussed herein, the term reference material (briefly, RMs) device refers to objects manufactured with the aim to be used in all stages of the measurement process, including measurement method validation, instrument calibration and quality control. They may also be used in inter laboratory comparisons for method validation and for assessing laboratory proficiency. The definition of reference material in the specification ISO 17034 is also recalled, i.e. a material, sufficiently homogeneous and stable with respect to one or more specified properties, which has been established to be fit for its intended use in a measurement process. Reference it is also made to the reference material definition in ISO/IEC Guide 99:2007. A reference material device may be therefore a device which is manufactured and configured to present the reference material behavior with respect to one or more specified properties, namely sufficiently homogeneous and stable with respect to one or more specified properties, which has been established to be fit for its intended use in a measurement process.

As discussed herein, the term 3D printing refers to additive manufacturing processes, per se known, which are suitable to build three-dimensional (briefly, 3D) objects (or artefacts) from a digital model by various processes in which material, for instance plastic or metallic, is joined or solidified. Additive manufacturing may provide a flexible manufacturing process facilitating to obtain customized products.

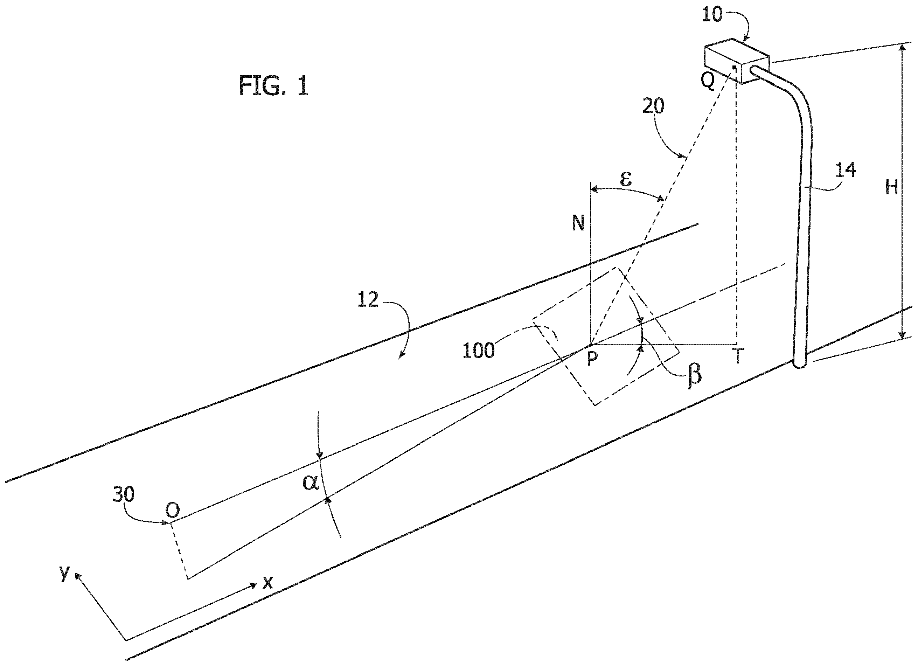

As exemplified in Figure 1, a luminaire 10 is shown configured to emit light and located at a side of a road surface 12 extending along in a longitudinal direction X and in a transverse direction Y on a XY-plane. The luminaire 12 may be mounted on a light pole 14 at a distance H from the road surface 12. Light emitted from the luminaire 10 follows a light path 20 from a photometric center Q of the luminaire 10 towards a point P on the road surface 12. The point P may be different from point T belonging to a normal QT to the road surface 12 passing through the photometric center Q of the luminaire 10.

The light path 20 forms an angle ε, defined as the angle between a N normal at P to the road surface 12 and the light path 20 of the emitted light incident at point P, measured in degrees or radians.

A further angle β may be defined between oriented traces of a vertical planes belong in the horizontal XY-plane of the road surface 12, i.e. as an angle between a vertical plane passing for the observation point O and the observed point P and a vertical plane passing for the observed point P and the road luminaire 10. In other words, the angle β may be defined between:

a first intersection line between a plane normal to the XY-plane including points O and P with the XY-plane, and
a second intersection line PT between a plane normal to the XY-plane including points P and T and the XY-plane.

Luminance may be used to amount light passing through, being emitted from, or being reflected from a particular area and falling within a certain solid angle.

In order to set levels of luminance, road lighting system design may provide correlating the spatial distribution of luminous flux incident on the road surface with its luminance through the reflective characteristics of the surface.

Luminance of the luminaire 10 at a point P of the road surface as seen from an observer 20 from an observation point O (e.g., eye-quota of the observer 30) along a viewing direction angle α may be estimated as a function of:

- the direction of the incident luminous flux, namely angle of incidence ε,
- the viewing direction α,
- the reflective characteristics of the road surface, such as spectral reflectance and reflectance spatial distribution.

For instance, to evaluate lighting features of a single road lighting pole 10, parameters which may be suitable to be taken into account to provide such a correlation may comprise a luminance coefficient q and a reduced luminance coefficient r, which may be expressed, respectively, as:

$$q = \frac{L}{E}$$

$$r = q\cos^3(\varepsilon)$$

where:

L is the luminance measured in candela units (1 candela = 1 cd) per square meter (cd/m$^2$), and

E is the illuminance measured in lux units (1 lux =1 lx= 1 cd·sr/m$^2$).

While the spectral reflectance is neglected, reference values of a luminance coefficient q and a reduced luminance coefficient r are "unknowns" in a scenario as exemplified in Figure 1, meaning there is no direct relation with respect to the observable geometrical parameters (e.g., the viewing angle α and lighting direction ε).

The value of the viewing angle α is conventionally assigned (currently to be equal to 1°, equivalent to distances of 60 to 90 m for a driver of a road vehicle). Because of this, the reflection properties of a road surface can be described by a table of values of reduced luminance coefficient r with angle β and lighting direction ε as parameters, indicated as an "r-table" or "CIE table". Such a table is indicated as CIE 144 C1 table and is discussed, for instance, in document [4] mentioned in the foregoing.

Therefore, a measurement setup may be obtained by providing a light source to represent the luminaire 10, and a photosensor or a (video) camera placed in the observation point O, such light source and photosensor being geometrically arranged so as to define values of viewing direction angle α, further angle β and lighting direction, which are compatible with the measurement.

Thus, summarizing the above, a photometric instrument configured to detect the light reflected by said road pavements in determined geometric conditions, Q, P, O, α, β, ε of incidence, β, ε of the light on the road pavement and of detection α of said reflected light, is for instance configured to measure the light reflected from road surfaces - in order to measure photometric properties such as the reflected luminance and/or the reduced coefficients r- illuminated by a light source representing the road luminaire 10 emitting light impinging thereon at an observed point P, the light propagating from the light source 10, in particular from a photometric center Q of the road luminaire 10, along a light path 20 so as to determine, as seen from an observation point O, where the photosensor or (video) camera is arranged in the setup, at a given viewing direction angle α with respect to the road, in particular having the value of 1°:

a) a first incidence angle ε, i.e. the lighting direction, between the light path 20 and a normal N to the road surface 12; and
b) second incidence angle β between a vertical plane passing for the observation point O and the observed point P and a vertical plane passing for the observed point P and the road luminaire 20. These road reflective characteristics measurement setup may be embodied for instance by a portable device for in situ measurement of road surface properties.

A portable measurement apparatus, suitable for use in co-operating with the solutions described herein toolkit is discussed in the publication Y. Guillard V. Muzet, JL.Paumier. Coluroute: "A mobile gonioreflectometer to characterize the road surface photometry", In Proceedings of CIE International Symposium on Road Surface Characteristics, pages CD-ROM, 2007. In this case a plurality of light sources is used impinging at different angles, defining many combinations of angles β and ε. The reflect light is collected by a lens at the observation point in an optic fiber.

Further devices suitable for use with the solution here described are discussed in document Muzet, V., Bernasconi, J., Iacomussi, P., Liandrat, S., Greffier, F., Blattner, P., Reber, J., & Lindgren, M. (2020). Review of road surface photometry methods and devices - Proposal for new measurement geometries. Lighting Research & Technology, doi: 1477153520958454.

For the sake of simplicity, one or more embodiments are discussed in the following with reference to values of such a CIE 144 C1 table, being otherwise understood that such an r-table is purely exemplary and in no way limiting. Reference materials RM as per the present disclosure may be manufactured using values of surface reflectance from notionally any r-table.

One or more embodiments may use a reference material 100 manufactured to have specific reflectance properties for the given angles of incidence (herein β and ε) as in the so-called r-tables which may be used in a method of road luminance measurement and calibration.

As mentioned, a reference material (briefly, RM) is an object or device comprising a material adequately homogeneous and stable with respect to one or more specified properties (quantitative or qualitative, possibly together with an associated measurement uncertainty), fit for use in a measurement process. Uses may include the calibration of a measurement system, assessment of a measurement procedure, assigning values to other materials and quality control.

As exemplified herein, RM devices 100 are manufactured using a 3D printing process to shape one or more materials having determined material reflectance properties (e.g., gloss, spectral reflectance distribution and spatial reflectance distribution).

Advantageously, a technical solution as disclosed herein may comprise manufacturing a kit of Reference materials as portable "tiles" having a quadrangular base, preferably having a square size with an area of 20 cm$^2$.

In one or more embodiments, each RM device 100 may comprise an external frame to identify a reference surface plane (maximum height of the object).

As mentioned, 3D printing or additive manufacturing (briefly, AM) processes may comprise processes, per se known, such as binder jetting, directed energy deposition, material extrusion, material jetting, powder bed fusion, sheet lamination, vat photo-polymerization, fused filament fabrication (also known as Fused deposition modeling - FDM). Some methods melt or soften the material to produce the layers. For instance, FDM processing produces an object or part by extruding small beads or streams of material, which quickly harden to form layers. For instance, a filament of thermoplastic, metal wire, or other material is fed into an extrusion nozzle head (3D printer extruder), which heats the material and turns the flow on and off. Another technique fuses parts of the layer and then moves upward in the working area, adding another layer of granules and repeating the process until the piece has built up. FFF/FDM may facilitate to use more recycled materials, using directly pellets, without performing conversion to filament, in a process called fused particle fabrication (briefly, FPF or fused granular fabrication - FGF).

Luminance measurement instruments as considered herein may comprise instruments such as, for instance, a goniophotometer for measurement of the light emitted from an object at different angles.

A method of manufacturing one or more RM devices 100 suitable to calibrate luminance measurement instruments may comprise:

providing a set of luminance parameter values stored in rows and columns of an r-table,
applying down-sampling to the provided r-table, comprising selecting a subset of luminance parameter values from the r-table and applying normalization thereto (e.g., dividing values by the maximum value in the table), producing a down-sampled normalized r-table having such a selected subset of luminance parameter values stored in rows and columns.

For instance, the operation of down-sampling may comprise selecting a first amount of, e.g., 10, (non-adjacent) rows of the r-table, and a second amount of, e.g., 5, (adjacent) columns of the r-table, producing a down-sampled normalized table as exemplified in Table I in the following.

Table I: exemplary down-sampled r-table

| ε | β | | | | |
|---|---|---|---|---|---|
| | 0,00 | 2,00 | 5,00 | 10,00 | 15,00 |
| 45,00 | 0,02 | 0,02 | 0,02 | 0,02 | 0,01 |
| 56,31 | 0,03 | 0,03 | 0,03 | 0,02 | 0,02 |
| 63,43 | 0,05 | 0,05 | 0,04 | 0,03 | 0,02 |
| 71,57 | 0,11 | 0,10 | 0,07 | 0,04 | 0,02 |
| 75,96 | 0,18 | 0,14 | 0,08 | 0,04 | 0,02 |
| 78,69 | 0,25 | 0,18 | 0,09 | 0,03 | 0,02 |
| 81,25 | 0,37 | 0,24 | 0,09 | 0,03 | 0,02 |
| 82,87 | 0,50 | 0,29 | 0,09 | 0,04 | 0,03 |
| 83,99 | 0,70 | 0,37 | 0,12 | 0,05 | 0,05 |
| 85,03 | 1,00 | 0,51 | 0,016 | 0,07 | 0,07 |

Table I shows a down-sampled r-table comprising normalized reflectance values for a reduced set of angles of incidence ε and β selected from the values in the r-table CIE 144.

In one or more embodiments, the method may further comprise applying a further down-sampling to the down-sampled r-table, comprising selecting a portion of a further reduced subset of rows and columns from the down-sampled table.

For instance, the method may further comprise selecting the last four rows as well as the first and third column of the down-sampled r-table as exemplified in Table I, producing a further down-sampled r-table as exemplified in Table II that follows.

Table II: exemplary further down-sampled r-table

| ε | β | |
|---|---|---|
| | **0,00** | **5,00** |
| **81,25** | 0,37 | 0,09 |
| **82,87** | 0,50 | 0,09 |
| **83,99** | 0,70 | 0,12 |
| **85,03** | 1,00 | 0,16 |

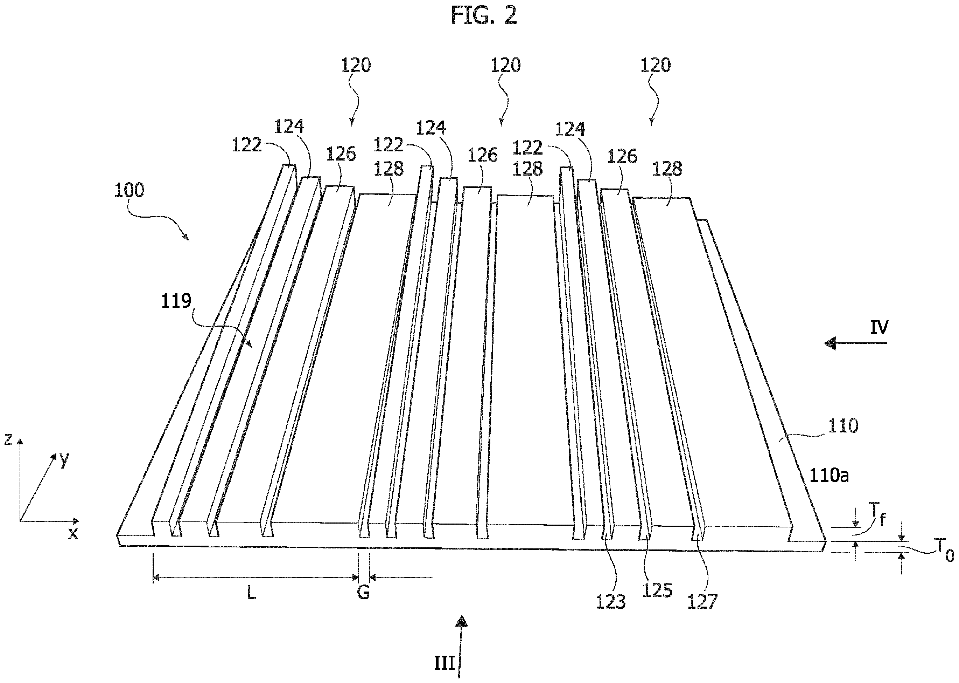

As exemplified in Figures 2 to 4, a RM device 100 may comprise:

- a planar support base 110, in the example quadrangular, e.g. a parallelepiped or plate shaped tile, having a reference planar surface 110a with a thickness $T_0$ with respect to a horizontal XY plane corresponding to a base surface 110b of the planar quadrangular support base 110 opposite to such reference planar surface,
- a sculptured pattern 119 comprising at least one group 120 of polyhedral formations, in particular prismoid-shaped, 122, 124, 126, 128 extending from the reference surface 110a along a direction Z orthogonal to the horizontal XY plane, i.e. a vertical direction.

For instance, a group 120 may comprise (right) prismoid-shaped formations 122, 124, 126, 128 extending across a direction Y of the support base 110, the prismoid-shaped formations 122, 124, 126, 128 forming respective channels 123, 124, 125 therebetween.

For instance, in order to reproduce luminance parameters of one of the columns of Table II, the group 120 may comprise a set of four prismoid-shaped formations 122, 124, 126, 128, in sequence along direction X, each polyhedral formation corresponding to a value of reduced luminance coefficient r in a respective column of Table II.

In the following, for the sake of simplicity, principles underlying one or more embodiments are discussed mainly with respect to such a number of prismoid-shaped formations, being otherwise understood that such a quantity is purely exemplary and in no way limiting.

The group 120 may have, for instance, a total width L, in the example shown approximately equal to one third of a full-width L0 of the support base 110, along the horizontal X direction and may extend across the full-length of the support base 110 along the Y direction.

As exemplified in Figures 2 to 4, the RM device 100 may comprise a plurality of groups 120 of the sculptured pattern 119. For instance, there may be a "lattice" of spatially periodic repetitions of the pattern 120 of the prismoid-shaped formations 122, 124, 126, 128, the lattice extending along a direction X of the support base 110 perpendicular to the direction Y in which the prismoid-shaped formations extend. For instance, the spatially periodic repetitions of the group 120 are separated therebetween by a separation zone 130 having a length G in the direction X, defining a linear repetition step of the lattice.

The prismoid-shaped formation, for instance the one indicated with 122, in general has a main dimension along direction Y, in particular of the same length of the length L0 of the support base 110 in such a direction, the two bases of the prismoid-shaped formation being at the front face and at the back face of the support base 110, i.e. vertical faces perpendicular to the length L0 of the support base 110.

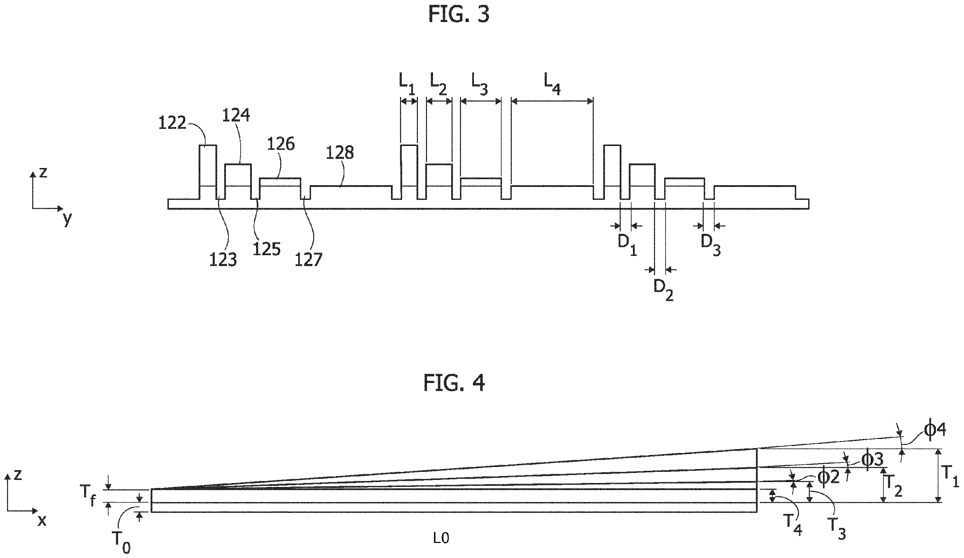

As exemplified in Figure 3, the front face and the back face are rectangular, including square, but may differ in the dimensions of such rectangles, hence the definition of prismoids, i.e. a polyhedron whose vertices all lie in two parallel planes, both planes having the same number of vertices, and the lateral faces being either parallelograms or trapezoids.

As better described in the following the prismoid-shaped formations 122, 124, 126, 128 have a front base and a rear base which are aligned to the reference surface 110, however the front base is smaller in height with respect to the rear base, thus the vertical lateral faces of the prismoid are trapezoid, in particular rectangular trapeze having the bases coinciding with the edges of the front and rear base of the prismoid, while the upper lateral face of the prismoid is rectangular. The lower lateral face lies on the reference surface 110a, in particular is integral with such reference surface 110.

As exemplified herein, the surface areas of the prismoid-shaped formations, as viewed from the given observation angle α i.e. their projected areas, are designed to have a ratio equal to that of the down-sampled r-table values. This leads to the prismoid-shaped formations having a same reflectance ratio for the different lighting angles as described in the r-table.

A RM device 100 as exemplified in Figures 2 to 4 may be adapted to have a normalized spatial reflectance distribution having the values of the first column of Table I, namely β=0°, when located in an observed point P and viewed from an observation point O with respect to a luminaire 10 as exemplified in Figure 1.

As exemplified in Figures 2 and 3, the group 120 of prismoid-shaped formations 122 124, 126, 128 may have different thicknesses, lengths and be separated therebetween by channels, 123, 125, 127, having different depth. Moreover, such prismoid-shaped formations 122 124, 126, 128 may have two ends, or bases, of different height, for instance as exemplified in Figure 2, wherein such prismoid-shaped formations have:

- a same height $T_f$ at a first end, e.g., at a frontside end, and
- different heights $T_1$, $T_2$, $T_3$, $T_4$ therebetween at a second end, e.g., at a rear-side end.

This difference of thicknesses between one end and the other may result in some prismoid-shaped formations being sloped with respect to the reference planar surface of the support base 110, namely having trapezoidal lateral faces.

For instance, the group 120 of prismoid-shaped formations 122 124, 126, 128 may comprise, as exemplified in Figure 3:

- a first prismoid-shaped formation 122 having a first height T1 of the rear base and a first top face, i.e. upper lateral face, having a first width L1, in the Y direction;
- a second prismoid-shaped formation 124 having a second height T2 of the rear base and a second top face having a second width L2, the second prismoid-shaped formation 124 being separated from the first prismoid-shaped formation 122 by a first channel 123 formed therebetween, the first channel 123 having a first channel width D1;
  a third prismoid-shaped formation 126 having a third height T3 of the rear base and a third top face having a third width L3, the third prismoid-shaped formation 126 being separated from the second prismoid-shaped formation 124 by a second channel 125 formed therebetween, the second channel 125 having a second channel width D2,
- a fourth prismoid-shaped formation 128 having a fourth height T4 of the rear base and a fourth top face having a fourth width L4, the fourth prismoid-shaped formation 128 being separated from the third prismoid-shaped formation 126 by a third channel 127 formed therebetween, the third channel 127 having a third channel width D3.

For instance, the i-th prismoid-shaped formation in a group 120 may have a respective i-th height value Ti greater than the (i+1)-th height value Ti+1, e.g., T1>T2>T3>T4.

For instance, the smallest height of the rear base heights of the prismoid shaped formations 122, 124, 126, 128 may be equal to the front-end height value of the front base, e.g., T4=Tf.

As exemplified in Figure 3, respective channel widths D1, D2, D3 may have a same value, e.g., D1=D2=D3. For instance, the channel widths may all be equal to the spatial periodicity width, e.g. D1=D2=D3=G.

In one or more embodiments as exemplified herein, areas of the prismoid-like formations, in particular their exposed top faces, are designed so that their projected area at the observation point O, i.e. as seen from the observation point O, defining the observation angle $\alpha$, in particular of about 1° in a direction of the projection plane of Figure 3, has a value proportional (e.g., equal) to the value of the reflectance at angle $\beta$ and $\epsilon$ selected from the normalized r-table. Thus, the areas projected at said observation angle $\alpha$ have values proportional to the reflectance values in said subset of reflectance values selected from said provided tabular dataset of reflectance values r.

The projected area of the prismoid-like formations can be calculated, also analytically, or numerically computed.

There are several calculation method which can be applied, for instance using rotation matrixes to calculate the position of the vertices of a rectangle representing the top surface when with the main axis in direction of the observer and lying on the plane of the road, the rectangle being rotated about the axes around which angle epsilon and beta are rotated in order to send the reflection in the observer point for alpha=1°. Then the area rectangle defined by the vertices with the application of the rotation matrixes can be resized to respect the proportionality indicated by the corresponding r values.

By way of example, the projected area can also be calculated by a graphical method, i.e. with the use of a CAD.

By way of example, considering the coefficients r in Table II in a first step the case with $\beta$=0, i.e. aligned with the line connecting to the observed point P the observer, light direction angle $\epsilon$ is measured with respect to the normal to the road plane, and viewing angle $\alpha$ is measured with respect to the road plane. These two angles remain fixed.

Viewing direction angle $\alpha$ is one degree fixed, it is taken $\epsilon$ equal to 85 at $\beta$ equal to zero, which means r=1 in Table II, i.e., all the specular reflection impinging at $\epsilon$ equal to 85 must reach the observer, or photosensor, at angle $\alpha$=1°. Thus, the prismoid face with a given area A is to be inclined so that specular reflection of a ray light on such surfaces is directed along OP, i.e., makes an angle $\alpha$ of 1 degree with the road pavement, i.e., the horizontal plane. This means that light impinging at 90-$\epsilon$ with respect to the road plane, i.e. 5 degrees is reflected at 1 degree, this making the inclination of the area of 4 degrees. This corresponds to rotate the surface so that its normal is rotated by (90-$\epsilon$)- $\alpha$=4 degrees

Then the area A of the surface is resized according to $\epsilon$. For $\epsilon$ equal to 85 no resize is performed since it is the maximum surface. For $\epsilon$ equal to 84, still with $\beta$ equal to zero and a equal to 1, the normal of the prismoid surface is rotated by (90-$\epsilon$)-$\alpha$=5 degrees. Then

area is resized so that is equal to r for these angles, i.e., equal to 0.7. In the same way, the other normal rotation and resize are calculated for r=0.5 and r=0.37. Resize is always to be performed after rotating the normal of the angle dictated by $\alpha$ and $\varepsilon$.

For $\beta=5°$ the same steps are repeated, taking in account the rotation of the normal of the surface of 90-$\varepsilon$)-$\alpha$ and the rotation of -$\beta$, then performing the resizing according to the corresponding value of r in Table II.

These steps can be performed for instance using a CAD to represent the prismoid surface of area A as viewed by the observer O and performing there the rotations according to $\varepsilon$ and $\beta$ and the resize.

It is noted that each prismoid-shaped formation validly relates to a given pair of values of parameters $\beta$ and $\varepsilon$.

Thus, as just shown, the geometric parameters of the prismoid-like formations, e.g. 122, 124, 126, 128 or 122', 124', 126', 128', are selected so that a ratio of respective areas projected at said observation angle $\alpha$ has a value proportional to said subset of reflectance values selected from said provided tabular dataset of reflectance values r. Thus, the geometric parameters of the prismoid-like formations are selected so that respective areas projected at said observation angle $\alpha$ have values proportional to the reflectance values in said subset of reflectance values selected from said provided tabular dataset of reflectance values r. In other words, the ratio of the projected areas of the prismoid like formations one to the other corresponds to the ratio of the reflectance values in a subset one to the other.

Also areas of channel-like formations, for instance may be additionally taken in account. In one or more embodiments, geometric parameters (e.g., a width D1, D2, D3) of channel-like formations 123, 125, 127 can be selected in order to prevent and counter shadowing effects between adjacent prismoid-like formations at a selected pair $\varepsilon$, $\beta$ of illumination angles.

As exemplified in Figure 4, the group 120 of prismoid-shaped formations 122, 124, 126, 128 may have linearly varying sloped profiles in the vertical YZ plane of respective prismoid-shaped formations 122, 124, 126, 128. For instance:

the first prismoid-shaped formation 122 may have a first slope angle $\phi1$, i.e. the angle of the top surface or exposed surface of the prismoid-shaped formation facing upwards with respect to support 110
the second prismoid-shaped formation 124 may have a second slope angle $\phi2$,
the third prismoid-shaped formation 126 may have a third slope angle $\phi3$,
the fourth prismoid-shaped formation 128 may have a fourth slope angle $\phi4$,
where the slope angles $\phi1$, $\phi2$, $\phi3$, $\phi4$ may be decreasing, reaching zero degrees, from the first to the last slope angle, e.g., $\phi1 > \phi2 > \phi3 > \phi4 = 0°$.

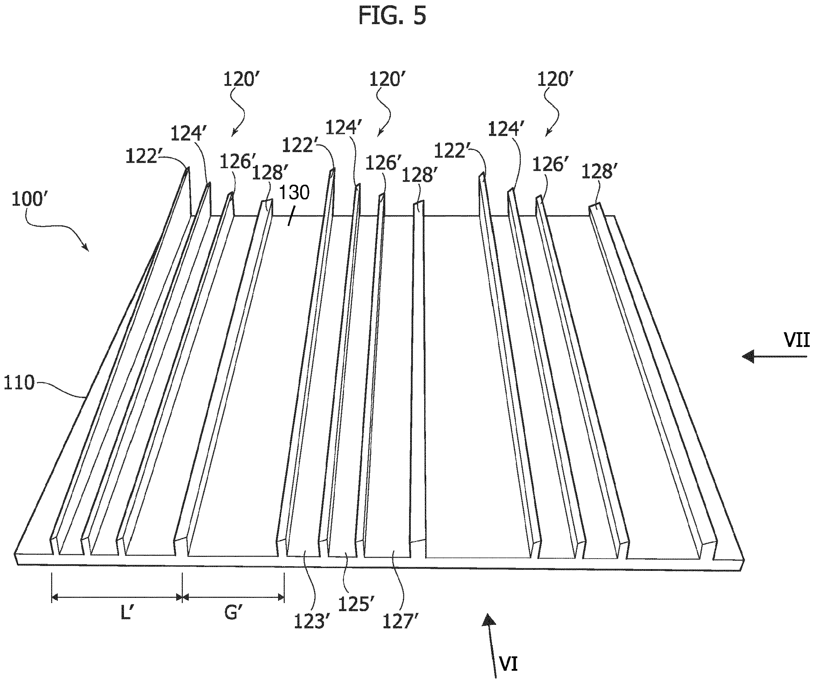

As exemplified in Figure 5, a further embodiment of a RM material 100' may comprise a further pattern 120' of polyhedral formations 122', 124', 126', 128'.

Such a further pattern 120' may be adapted to have a normalized spatial reflectance distribution having the values of the second column of Table II, namely $\beta=5°$, when located in an observation point P with respect to a luminaire 10 as exemplified in Figure 1.

One or more embodiments as exemplified in Figures 5 to 7 may comprise prismoid-shaped formations 122', 124', 126', 128' which may have respective widths very reduced with respect to the widths L1, L2, L3, L4 of the like prismoid-shaped formations 122, 124, 126, 128 as exemplified in Figures 2 to 4, because are calculated for a different lighting angle $\beta$. As a result of reduced widths, the prismoid-like formations of this further embodiment 100' may be referred to also as lamellae-like formations.

As exemplified in Figure 2, for instance, channel-like formations interposed between adjacent prismoid-like formations (128, 122, for instance) have a gap width D1, D2, D3, G that can be selected to have a value calculated based on the heights T1, T2, T3, T4 of prismoid-like formations so that, at the selected pair of illumination parameters $\beta$, $\varepsilon$, shadows of adjacent facets (122, 126 for instance) are prevented/countered from otherwise affecting (e.g., by being projected thereon) the corresponding facet of the prismoid-like formation (128, for instance).

In one or more embodiments as exemplified in Figure 5, the group 120' of formations may have a group length L' reduced with respect to the group length L as exemplified in Figure 2, and a gap length G' increased with respect to the gap G of as exemplified in Figure 2.

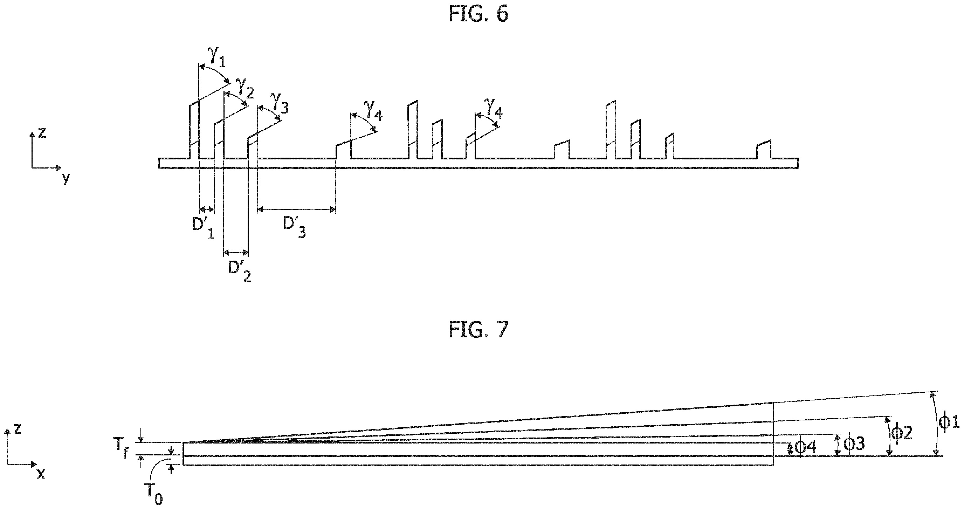

As exemplified in Figure 6, the top facets of the prismoids, i.e. their top surfaces, may be tilted not only in the vertical YZ direction (slope angles $\phi1$, $\phi2$, $\phi3$, $\phi4$) but also in the direction XZ, being sloped of respective tilt angles $\gamma1$, $\gamma2$, $\gamma3$, $\gamma4$, $\gamma f$ with respect to the planar reference surface 110.

Such a slope is important to deviate the light impinging towards the direction of sensing for the given $\beta$ and $\varepsilon$ angles, thanks to geometric optics considerations, as appreciable to those of skill in the art.

Thus, in the method here described the geometric parameters of a pattern, e.g. 120 or 120' comprises parameters selected out of a group of geometric parameters comprising:

a length L in a longitudinal direction Y,
lengths L1, L2, L3, L4 in a transverse direction X orthogonal said longitudinal direction Y,
slope angles $\phi1$, $\phi2$, $\phi3$, $\phi4$ of exposed surfaces with respect to a support base 110,
tilt angles $\gamma1$, $\gamma2$, $\gamma3$, $\gamma4$, $\gamma f$ of exposed surfaces with respect to a support base 110
width D of such channel-like separations, e.g. 123, 125, 127.

As mentioned, surface area for each prismoid-shaped formation has the value of the normalized reduced table for the given β and ε angles and has been calculated as the viewing area seen from the angle of observation α, of a unitary area in the given β and ε directions.

In one or more embodiments, the method of manufacturing reference materials may further comprise performing 3D printing or additive manufacturing to produce a tile-like object, preferably a tile having a size of approximately 20 cm x 20 cm, for instance 3D printing using a 3D printable material, for instance chalk, but other 3D printable materials can be used. This results in manufacturing a set of RM objects, for instance a set of two objects 102, 104, designed to have the normalized spatial reflectance distribution described by the numbers in the first column of Table I, for an observer at observation angle α=1° and β=0° of Figure 1.

The method may comprise manufacturing a set of RM objects, for instance including also an RM device 100'' having the given normalized spatial reflectance distribution for both directions of incidence β=0°and β=5°) of Table II.

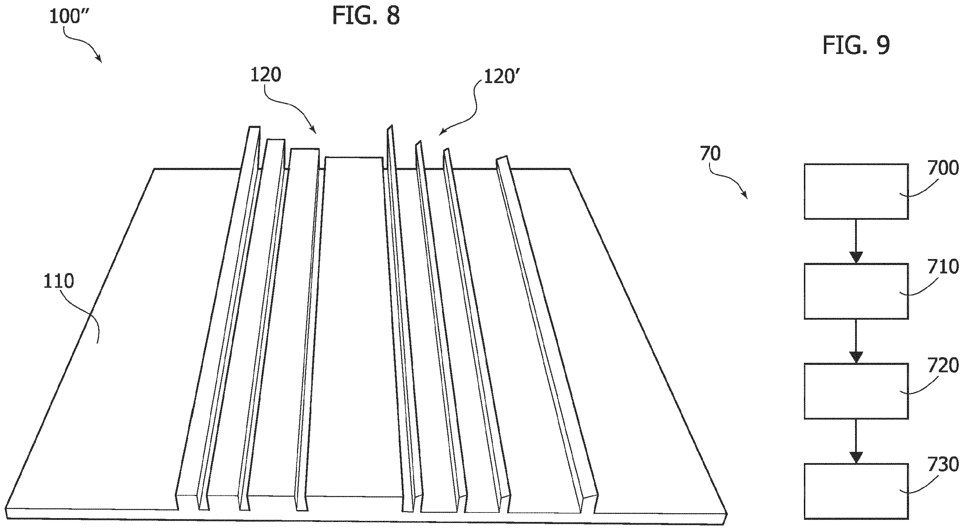

For instance, such a further RM device 100'' as exemplified in Figure 8, may comprise a first pattern 120 and a second pattern 120' so as to provide a compact material to perform a plurality of measurements.

In one or more embodiments, such an operation of manufacturing may comprise supplying 3D-printing material to the 3D-printer to obtain such RM devices 100, 100', 100''.

One or more embodiments may include performing 3D printing using one or more materials selected out of a group of materials consisting of: aluminum, an austenitic nickel-chromium-based superalloy, iron, graphite, thermoplastic materials.

As discussed herein the term thermoplastic material refers to plastic polymer materials that becomes pliable or moldable at a certain elevated temperature and solidify upon cooling.

Such may preferably comprise thermoplastic materials having a paint sheen with different colors and glossiness, preferably glossy or matte (or flat) black or grey coloring.

Such a coloring and levels of glossiness may facilitate mimicking the behavior of the road pavement material.

One or more embodiments may preferably not comprise metallic materials, so as to reduce polarization effects that can influence measurement results.

Preferably, such thermoplastic materials having a glossy black, matte grey or and matte black coloring. These materials can be selected, for instance, in a group of materials comprising:

- materials like Acrylonitrile butadiene styrene (ABS), also known as ABS-like materials,
- a material known with the commercial name of Jet Fusion Grey™,
- a material known by the commercial name of Jet Fusion Black™.

One or more embodiments may also use White matte materials (Synthetic White and Synthetic White Premium) having high reflectance diffused behavior, above 75 %.

One or more embodiments advantageously use materials presenting a flat spectrum (without strong spectral dependency) in order to avoid spectrum divergences induced because of different detector spectral sensitivity and illuminating source influences.

In one or more embodiments, a kit of calibration RM devices may comprise a set of reference material devices or samples 100, 100', 100'', in particular the kit comprising at least a reference device 100; 100'; 100'' according to the solution here described. In particular, such kit of reference material devices may comprise a plurality of said devices 100; 100'; 100'', configured to present ratios of the respective areas with values proportional to reflectance values selected from different tabular dataset of reflectance or from different subset of a tabular dataset of reflectance.

For instance, the reference device or calibration toolkit may be used for calibrating a portable device for in situ measurement of road surface properties and, especially, goniometer-based devices.

In Table III is shown a summary of properties of RMs which may be used to produce in a kit of Reference material devices.

**Table III**

| Material | Color | Specularity |
|---|---|---|
| JET FUSION | Grey | Matte |
| JET FUSION | Black | Matte |
| ABS LIKE | Black | Glossy |

As exemplified in Figure 9, a method 70 of manufacturing one or more reference material devices 100, 100', 100'' suitable to calibrate luminance measurement instruments may comprise:

indicated by 700: providing a set of luminance parameter values stored in rows and columns of an r-table,

indicated by 710: applying down-sampling to the provided r-table, comprising selecting a subset of luminance parameter values from the r-table and applying normalization thereto (e.g., dividing values by 100), producing a down-sampled normalized r-table having such a selected subset of luminance parameter values stored in rows and columns; optionally, apply a further down-sampling to the r-tables, to obtain a further reduced r-table set;

indicated by 720: setting geometric parameters (thicknesses, slopes, widths) of a pattern of prismoid-like shapes protruding from a reference surface 110 and separated by channels therebetween, as a function of the selected r-values. Such geometric parameters of a pattern may comprise parameters selected out of a group of geometric parameters comprising: a length L in a longitudinal direction Y, lengths L1, L2, L3, L4 in a transverse direction X orthogonal said longitudinal direction Y, tilt angles $\phi1, \phi2, \phi3, \phi4$ of exposed surfaces with respect to a support base 110, tilt angles $\gamma1, \gamma2, \gamma3, \gamma4, \gamma f$ of exposed surfaces with respect to a support base 110, width D of said channel-like separation, e.g. 123, 125, 127.

indicated by 730: performing 3D printing of a reference material device 100, 100', 100" comprising a tile support base 110 from which the plurality of prismoid-like protrusions extends, wherein 3D printing comprises using as 3D printing material a thermoplastic material having a black or grey coloring and a glossy or matte finish, so as to mimic a road pavement.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

## Claims

1. A method (70) of manufacturing a device (100; 100'; 100") for use as reference material in calibrating an instrument to measure luminance of a road surface (12), the method (70) being **characterized by**:

   providing (700) a tabular dataset of reflectance values (r), in particular normalized reflectance values, of road surfaces illuminated by a road luminaire (10) emitting light impinging thereon at an observed point (P), the light propagating from the road luminaire (10), in particular from a photometric center (Q) of the road luminaire (10), along a light path (20) so as to determine, as seen from an observation point (O) at a given viewing direction angle $\alpha$ with respect to the road, in particular of 1°:

   e) a first incidence angle ($\varepsilon$) between the light path (20) and a normal (N) to the road surface (12); and
   f) a second incidence angle ($\beta$) between a vertical plane passing for the observation point (O) and the observed point (P) and a vertical plane passing for the observed point (P) and the road luminaire (10);

   selecting (710) a subset of reflectance values from said provided tabular dataset of reflectance values (r);
   setting (720), as a function of the selected reflectance values, geometric parameters of a pattern (120; 120') of prismoid-like formations (122, 124, 126, 128; 122', 124', 126', 128') separated therebetween by channel-like formations (123, 125, 127; 123', 125', 127'), wherein said geometric parameters of the prismoid-like formations (122, 124, 126, 128; 122', 124', 126', 128') are selected so that respective areas projected at said viewing direction angle ($\alpha$) have values proportional to the values of said subset of reflectance values selected from said provided tabular dataset of reflectance values (r);
   manufacturing (730), in particular by 3D printing, said pattern (120, 120') of prismoid-like formations (122, 124, 126, 128; 122', 124', 126', 128') separated by said channel like-formations (123, 125, 127; 123', 125', 127') onto a support base (110), in particular quadrangular, having a constant thickness ($T_0$), in particular as a single piece.

2. The method of claim 1, wherein said geometric parameters of a pattern (120; 120') comprises parameters selected out of a group of geometric parameters comprising:

   a length (L) in a longitudinal direction (Y),
   lengths (L1, L2, L3, L4) in a transverse direction (X) orthogonal said longitudinal direction (Y),
   slope angles ($\phi1, \phi2, \phi3, \phi4$) of exposed surfaces with respect to a support base (110),
   tilt angles ($\gamma1, \gamma2, \gamma3, \gamma4, \gamma f$) of exposed surfaces with respect to a support base (110), and
   width (G, D) of said channel-like separation.

3. The method (70) of manufacturing of claims 1 or 2, wherein said setting (720) geometric parameters of said pattern (120; 120') of prismoid-like formations (122, 124, 126, 128; 122', 124', 126', 128') as a function of said selected reflectance values (r), comprises at least one of:

   setting a maximum (T1, T2, T3, T4) and a minimum (Tf) thicknesses of extremities of the prismoid-like formations (122, 124, 126, 128; 122', 124', 126', 128');

setting a length (L1, L2, L3, L4) of the top surface of the prismoid-like formations (122, 124, 126, 128; 122', 124', 126', 128');

setting tilt angles ($\gamma1$, $\gamma2$, $\gamma3$, $\gamma4$, $\gamma f$) of the top surfaces;

setting slope angles ($\phi1$, $\phi2$, $\phi3$, $\phi4$) of the top surfaces with respect to a support base (110) setting a spatial periodicity gap size (G; G').

4. The method (70) of manufacturing of any of the previous claims, wherein said manufacturing, in particular as a single piece said pattern (120, 120') of prismoid-like formations (122, 124, 126, 128; 122', 124', 126', 128') on a support base (110) having a constant thickness ($T_0$) comprises manufacturing by additive manufacturing.

5. The method of any of the previous claims, wherein said manufacturing, in particular, as a single piece said pattern (120, 120') of prismoid-like formations (122, 124, 126, 128; 122', 124', 126', 128') on a support base (110) having a constant thickness ($T_0$) comprises using non-metallic material.

6. The method of any of the previous claims, wherein said manufacturing said pattern (120, 120') of prismoid-like formations (122, 124, 126, 128; 122', 124', 126', 128') on a support base (110) having a constant thickness ($T_0$) comprises using thermoplastic materials.

7. The method of claim 6, comprising thermoplastic materials having specific light-reflecting properties selected out of glossy black, matte grey, and matte black plastic coloring.

8. A device (100, 100', 100'') for use as reference material in calibrating an instrument to measure luminance of a road surface (12), **characterized by** a pattern (120; 120') of prismoid-like formations (122, 124, 126, 128; 122', 124', 126', 128') separated therebetween by channel-like formations (130), wherein said geometric parameters of the prismoid-like formations (122, 124, 126, 128; 122', 124', 126', 128') are selected so that respective areas projected at a viewing direction angle have values proportional to the values of a subset of reflectance values selected from a provided tabular dataset of reflectance values, manufactured as a single piece onto a support base (110), in particular quadrangular, having a constant thickness ($T_0$),

said tabular dataset comprising reflectance values (r), in particular normalized reflectance values, of road surfaces illuminated by a road luminaire (10) emitting light impinging thereon at an observed point (P), the light propagating from the road luminaire (10), in particular from a photometric center (Q) of the road luminaire (10), along a light path (20) so as to determine, as seen from an observation point (O) at a given viewing direction angle $\alpha$ with respect to the road, in particular of 1°:

g) a first incidence angle ($\varepsilon$) between the light path (20) and a normal (N) to the road surface (12); and

h) a second incidence angle ($\beta$) between a vertical plane passing for the observation point (O) and the observed point (P) and a vertical plane passing for the observed point (P) and the road luminaire (20);

said subset of reflectance values being selected from said provided tabular dataset of reflectance values (r) ;

geometric parameters of a pattern (120; 120') of prismoid-like formations (122, 124, 126, 128; 122', 124', 126', 128') separated therebetween by channel-like formations (130), wherein said geometric parameters of the prismoid-like formations (122, 124, 126, 128; 122', 124', 126', 128') are selected so that respective areas projected at said viewing direction angle have values proportional to the values of said subset of reflectance values selected from said provided tabular dataset of reflectance values ($\varepsilon$, $\beta$);

said pattern (120, 120') of prismoid-like formations (122, 124, 126, 128; 122', 124', 126', 128') separated by said channel like-formations (123, 125, 127; 123', 125', 127') being manufactured onto a support base (110), in particular quadrangular, having a constant thickness ($T_0$), said support base (110) and pattern (120, 120') being in particular manufactured as a single piece.

9. The device (100, 100', 100'') of claim 8, the device (70) being manufactured (730) using the method of any of claims 1 to 7.

10. A kit of reference materials configured to calibrate a photometric instrument configured to detect the light reflected by said road pavements in determined geometric conditions (Q, P, O, $\alpha$, $\beta$, $\varepsilon$) of incidence ($\beta$, $\varepsilon$) of the light on the road pavement and of detection ($\alpha$) of said reflected light (12) to measure the luminance of a road surface, the kit comprising at least a reference device (100; 100'; 100'') according to claims 8 or 9.

11. The kit of reference materials according to claim 10, comprising a plurality of said devices (100; 100'; 100"), said plurality of devices (100; 100'; 100") being configured to present ratios of the respective areas with values proportional to reflectance values (r) selected from different tabular dataset of reflectance or from different subset of a tabular dataset of reflectance.

## Patentansprüche

1. Verfahren (70) zur Herstellung einer Vorrichtung (100; 100', 100") zur Verwendung als Referenzmaterial beim Kalibrieren eines Instruments zur Messung der Luminanz einer Straßenoberfläche (12), wobei das Verfahren (70) **gekennzeichnet ist durch**:

    Bereitstellen (700) eines tabellarischen Datensatzes aus Reflektivitätswerten, insbesondere aus normierten Reflektivitätswerten, von Straßenoberflächen, die **durch** eine Straßenleuchte (10), die auf einen beobachteten Punkt (P) einfallendes Licht aussendet, beleuchtet werden, wobei das Licht sich von der Straßenleuchte (10), insbesondere von einem fotometrischen Mittelpunkt (Q) der Straßenleuchte (10, entlang eines Lichtwegs (20) derart ausbreitet, dass aus Sicht eines Beobachtungspunkts (O) unter einem gegebenen Betrachtungsrichtungswinkel $\alpha$ in Bezug auf die Straße, insbesondere von 1°, bestimmt wird:

        e) ein erster Einfallswinkel ($\varepsilon$) zwischen dem Lichtweg (20) und einer Normalen (N) zu der Straßenoberfläche (12); und
        f) ein zweiter Einfallswinkel ($\beta$) zwischen einer vertikalen Ebene, die **durch** den Beobachtungspunkt (O) und den beobachteten Punkt (P) verläuft und einer vertikalen Ebene, die **durch** den beobachteten Punkt (P) und die Straßenleuchte (10) verläuft;

    Auswählen (710) einer Teilmenge von Reflektivitätswerten aus dem bereitgestellten tabellarischen Datensatz aus Reflektivitätswerten (r);
    Festlegen (720), als eine Funktion der ausgewählten Reflektivitätswerte, von geometrischen Parametern eines Musters (120; 120') aus prismenartigen Formationen (122, 124, 126, 128; 122', 124', 126', 128'), die **durch** kanalartige Formationen (123, 125, 127; 123', 125', 127') getrennt sind, wobei die geometrischen Parameter der prismenartigen Formationen (122, 124, 126, 128; 122', 124', 126', 128') so ausgewählt werden, dass entsprechende Bereiche, die unter dem Betrachtungsrichtungswinkel ($\alpha$) projiziert werden, Werte haben, die proportional zu den Werten der Teilmenge der Reflektivitätswerte sind, die aus dem bereitgestellten tabellarischen Datensatz aus Reflektivitätswerten (r) ausgewählt werden;
Herstellen (730), insbesondere **durch** 3D-Druck, des Musters (120, 120') aus prismenartigen Formationen (122, 124, 126, 128; 122', 124', 126', 128'), die **durch** die kanalartigen Formationen (123, 125, 127; 123', 125', 127') getrennt sind, auf einer Trägerbasis (110), insbesondere einer viereckigen, mit einer gleichbleibenden Dicke ($T_0$), insbesondere in einstückiger Form.

2. Verfahren nach Anspruch 1, wobei die geometrischen Parameter eines Musters (120; 120') Parameter umfassen, die ausgewählt sind aus einer Gruppe geometrischer Parameter mit:

    einer Länge (L) in einer Längsrichtung (Y),
    Längen (L1, L2, L3, L4) in einer Querrichtung (X), die senkrecht zur Längsrichtung (Y) ist,
    Neigungswinkeln ($\phi1, \phi2, \phi3, \phi4$) von freiliegenden Oberflächen in Bezug auf eine Trägerbasis (110),
    Kippwinkeln ($\gamma1, \gamma2, \gamma3, \gamma4, \gammaf$) von freiliegenden Oberflächen in Bezug auf eine Trägerbasis (110), und
    einer Breite (G, D) der kanalartigen Trennung.

3. Verfahren (70) zur Herstellung nach Anspruch 1 oder 2, wobei das Festlegen (720) von geometrischen Parametern des Musters (120; 120') von prismenartigen Formationen (122, 124, 126, 128; 122', 124', 126', 128') als eine Funktion der ausgewählten Reflektivitätswerte (r) umfasst:

    Festlegen eines Maximums (T1, T2, T3, T4) und eines Minimums (Tf) einer Dicke von Endpunkten der prismenartigen Formationen (122, 124, 126, 128; 122', 124', 126', 128'); und/oder
    Festlegen einer Länge (L1, L2, L3, L4) der oberen Fläche der prismenartigen Formationen (122, 124, 126, 128; 122', 124', 126', 128'); und/oder
    Festlegen von Kippwinkeln ($\gamma1, \gamma2, \gamma3, \gamma4, \gammaf$) der oberen Flächen; und/oder
    Festlegen von Neigungswinkeln ($\phi1, \phi2, \phi3, \phi4$) der oberen Flächen in Bezug auf eine Trägerbasis (110); und/oder
    Festlegen einer Lückengröße einer räumlichen Periodizität (G; G').

4. Verfahren (70) zur Herstellung nach einem der vorhergehenden Ansprüche, wobei das Herstellen, insbesondere als einstückiges Produkt, des Musters (120, 120') aus prismenartigen Formationen (122, 124, 126, 128; 122', 124', 126', 128') auf einer Trägerbasis (110), die eine gleichbleibende Dicke ($T_0$) hat, das Herstellen durch additives Herstellen umfasst.

5. Verfahren nach einem der vorhergehenden Ansprüche, wobei das Herstellen, insbesondere als einstückiges Produkt, des Musters (120, 120') aus prismenartigen Formationen (122, 124, 126, 128; 122', 124', 126', 128') auf einer Trägerbasis (110), die eine gleichbleibende Dicke ($T_0$) hat, das Verwenden von nicht-metallischem Material umfasst.

6. Verfahren nach einem der vorhergehenden Ansprüche, wobei das Herstellen des Musters (120, 120') aus prismenartigen Formationen (122, 124, 126, 128; 122', 124', 126', 128') auf einer Trägerbasis (110), die eine gleichbleibende Dicke ($T_0$) hat, das Verwenden von thermoplastischen Materialien umfasst.

7. Verfahren nach Anspruch 6, mit Verwendung von thermoplastischen Materialien mit speziellen Lichtreflektierenden Eigenschaften, die ausgewählt sind aus Kunststofffärbung mit schwarzem Glanz, mattem Grau und mattem Schwarz.

8. Vorrichtung (100, 100', 100") zur Verwendung als Referenzmaterial beim Kalibrieren eines Instruments zur Messung der Luminanz einer Straßenoberfläche (12), **gekennzeichnet durch**

   ein Muster (120, 120') aus prismenartigen Formationen (122, 124, 126, 128; 122', 124', 126', 128'), die jeweils durch kanalartige Formationen (130) getrennt sind, wobei die geometrischen Parameter der prismenartigen Formationen (122, 124, 126, 128; 122', 124', 126', 128') so ausgewählt sind, dass entsprechende Bereiche, die unter einem Betrachtungsrichtungswinkel projiziert sind, Werte haben, die proportional zu den Werten einer Teilmenge aus Referenzwerten sind, die ausgewählt sind aus einem bereitgestellten tabellarischen Datensatz von Reflektivitätswerten,
   Herstellung als einstückiges Produkt auf einer Trägerbasis (110), insbesondere einer viereckigen, mit einer gleichbleibenden Dicke ($T_0$),
   wobei der tabellarische Datensatz Reflektivitätswerte (r), insbesondere normierte Reflektivitätswerte, von Straßenoberflächen enthält, die durch eine Straßenleuchte (10) beleuchtet sind, die einfallendes Licht auf einen beobachteten Punkt (P) aussendet, wobei das Licht sich von der Straßenleuchte (10), insbesondere von einem fotometrischen Mittelpunkt (Q) der Straßenleuchte (10), entlang eines Lichtwegs (20) derart ausbreitet, dass bei Betrachtung von einem Beobachtungspunkt (O) unter einem gegebenen Betrachtungsrichtungswinkel α in Bezug auf die Straße, insbesondere von 1°, bestimmt wird:

   g) ein erster Einfallswinkel (ε) zwischen dem Lichtweg (20) und einer Normalen (N) zur Straßenoberfläche (12); und
   h) ein zweiter Einfallswinkel (β) zwischen einer vertikalen Ebene, die durch den Beobachtungspunkt (O) und den beobachteten Punkt (P) verläuft, und einer vertikalen Ebene, die durch den beobachteten Punkt (P) und die Straßenleuchte (20) verläuft;

   wobei die Teilmenge aus Reflektivitätswerten aus dem bereitgestellten tabellarischen Datensatz aus Reflektivitätswerten (r) ausgewählt ist; geometrische Parameter eines Musters (120; 120') aus prismenartigen Formationen (122, 124, 126, 128; 122', 124', 126', 128'), die jeweils durch kanalartige Formationen (130) getrennt sind, wobei die geometrischen Parameter der prismenartigen Formationen (122, 124, 126, 128; 122', 124', 126', 128') derart ausgewählt sind, dass entsprechende Bereiche, die unter dem Betrachtungsrichtungswinkel projiziert werden, Werte haben, die proportional zu den Werten der Teilmenge aus Reflektivitätswerten sind, die aus dem bereitgestellten tabellarischen Datensatz aus Reflektivitätswerten (ε, β) ausgewählt sind;
   wobei das Muster (120, 120') aus prismenartigen Formationen (122, 124, 126, 128; 122', 124', 126', 128'), die durch die kanalartigen Formationen (123, 125, 127; 123', 125', 127') getrennt sind, auf einer Trägerbasis (110), insbesondere einer viereckigen, die eine gleichbleibende Dicke ($T_0$) hat, hergestellt sind, wobei die Trägerbasis (110) und das Muster (120, 120') insbesondere als einstückiges Produkt hergestellt sind.

9. Vorrichtung (100, 100', 100") nach Anspruch 8, wobei die Vorrichtung (70) unter Anwendung des Verfahrens nach einem der Ansprüche 1 bis 7 hergestellt (730) ist.

10. Satz aus Referenzmaterialien, die ausgebildet sind, ein fotometrisches Instrument zu kalibrieren, das ausgebildet ist, das Licht zu erfassen, das von den Straßenbelägen in bestimmten geometrischen Bedingungen (Q, P, O, α, β, ε) bezüglich des Einfalls (β, ε) des Lichts auf den Straßenbelag und der Erfassung (α) des reflektierten Lichts (12) reflektiert wird, um die Luminanz einer Straßenoberfläche zu messen, wobei der Satz mindestens eine Referenzvorrichtung (100; 100'; 100") nach Anspruch 8 oder 9 umfasst.

11. Satz aus Referenzmaterialien nach Anspruch 10, mit mehreren der Vorrichtungen (100; 100'; 100"), wobei die mehreren Vorrichtungen (100; 100'; 100") ausgebildet sind, Verhältnisse der jeweiligen Bereiche mit Werten, die proportional zu Reflektivitätswerten (r) sind, die aus unterschiedlichen tabellarischen Datensätzen der Reflektivität oder aus unterschiedlichen Teilmengen eines tabellarischen Datensatzes der Reflektivität ausgewählt sind, zu präsentieren.

## Revendications

1. Procédé (70) de fabrication d'un dispositif (100 ; 100' ; 100") pour une utilisation en tant que matériel de référence lors de l'étalonnage d'un instrument pour mesurer la luminance d'une chaussée (12), le procédé (70) étant **caractérisé par** :

la fourniture (700) d'un ensemble tabulaire de données de valeurs de réflectance (r), en particulier de valeurs de réflectance normalisées, de chaussées éclairées par un lampadaire routier (10) émettant une lumière frappant celles-ci au niveau d'un point observé (P), la lumière se propageant à partir du lampadaire routier (10), en particulier à partir d'un centre photométrique (Q) du lampadaire routier (10), le long d'un trajet de lumière (20) de façon à déterminer, tel que vu depuis un point d'observation (O) selon un angle de direction de visualisation donné α par rapport à la route, en particulier de 1° :

e) un premier angle d'incidence (ε) entre le trajet de lumière (20) et une normale (N) à la chaussée (12) ; et
f) un second angle d'incidence (β) entre un plan vertical passant par le point d'observation (O) et le point observé (P) et un plan vertical passant par le point observé (P) et le lampadaire routier (10) ;

la sélection (710) d'un sous-ensemble de valeurs de réflectance parmi ledit ensemble tabulaire de données fourni de valeurs de réflectance (r) ;
la définition (720), en fonction des valeurs de réflectance sélectionnées, de paramètres géométriques d'un motif (120 ; 120') de formations de type prismoïde (122, 124, 126, 128 ; 122', 124', 126', 128') séparées par des formations de type canal (123, 125, 127 ; 123', 125', 127') entre elles, dans lequel lesdits paramètres géométriques des formations de type prismoïde (122, 124, 126, 128 ; 122', 124', 126', 128') sont sélectionnés de sorte que des aires respectives projetées selon ledit angle de direction de visualisation (α) possèdent des valeurs proportionnelles aux valeurs dudit sous-ensemble de valeurs de réflectance sélectionné parmi ledit ensemble tabulaire de données fourni de valeurs de réflectance (r) ;
la fabrication (730), en particulier par impression 3D, dudit motif (120 ; 120') de formations de type prismoïde (122, 124, 126, 128 ; 122', 124', 126', 128') séparées par lesdites formations de type canal (123, 125, 127 ; 123', 125', 127') sur une base de support (110), en particulier quadrangulaire, ayant une épaisseur constante (T$_0$), en particulier d'un seul tenant.

2. Procédé selon la revendication 1, dans lequel lesdits paramètres géométriques d'un motif (120 ; 120') comprennent des paramètres sélectionnés parmi un groupe de paramètres géométriques comprenant :

une longueur (L) dans une direction longitudinale (Y),
des longueurs (L1, L2, L3, L4) dans une direction transversale (X) orthogonale à ladite direction longitudinale (Y),
des angles de pente (φ1, φ2, φ3, φ4) de surfaces exposées par rapport à une base de support (110),
des angles d'inclinaison (γ1, γ2, γ3, γ4, γf) de surfaces exposées par rapport à une base de support (110), et
une largeur (G, D) de ladite séparation de type canal.

3. Procédé (70) de fabrication selon les revendications 1 ou 2, dans lequel ladite définition (720) de paramètres géométriques dudit motif (120 ; 120') de formations de type prismoïde (122, 124, 126, 128 ; 122', 124', 126', 128') en fonction desdites valeurs de réflectance (r) sélectionnées, comprend au moins l'un parmi :

la définition d'épaisseurs maximale (T1, T2, T3, T4) et minimale (Tf) d'extrémités des formations de type prismoïde (122, 124, 126, 128 ; 122', 124', 126', 128') ;
la définition d'une longueur (L1, L2, L3, L4) de la surface supérieure des formations de type prismoïde (122, 124, 126, 128 ; 122', 124', 126', 128') ;
la définition d'angles d'inclinaison (γ1, γ2, γ3, γ4, γf) des surfaces supérieures ;
la définition d'angles de pente (φ1, φ2, φ3, φ4) des surfaces supérieures par rapport à une base de support (110)
la définition d'une taille d'espacement de périodicité spatiale (G ; G').

4. Procédé (70) de fabrication selon l'une quelconque des revendications précédentes, dans lequel ladite fabrication, en particulier d'un seul tenant dudit motif (120 ; 120') de formations de type prismoïde (122, 124, 126, 128 ; 122', 124', 126', 128') sur une base de support (110) ayant une épaisseur constante ($T_0$) comprend une fabrication par fabrication additive.

5. Procédé selon l'une quelconque des revendications précédentes, dans lequel ladite fabrication, en particulier, d'un seul tenant dudit motif (120 ; 120') de formations de type prismoïde (122, 124, 126, 128 ; 122', 124', 126', 128') sur une base de support (110) ayant une épaisseur constante ($T_0$) comprend l'utilisation d'une matière non métallique.

6. Procédé selon l'une quelconque des revendications précédentes, dans lequel ladite fabrication dudit motif (120 ; 120') de formations de type prismoïde (122, 124, 126, 128 ; 122', 124', 126', 128') sur une base de support (110) ayant une épaisseur constante ($T_0$) comprend l'utilisation de matières thermoplastiques.

7. Procédé selon la revendication 6, comprenant des matières thermoplastiques ayant des propriétés de réflexion de lumière spécifiques sélectionnées parmi une coloration de matière plastique en noir brillant, gris mat et noir mat.

8. Dispositif (100, 100', 100") pour une utilisation en tant que matériel de référence lors de l'étalonnage d'un instrument pour mesurer la luminance d'une chaussée (12), **caractérisé par**

un motif (120 ; 120') de formations de type prismoïde (122, 124, 126, 128 ; 122', 124', 126', 128') séparées par des formations de type canal (130) entre elles, dans lequel lesdits paramètres géométriques des formations de type prismoïde (122, 124, 126, 128 ; 122', 124', 126', 128') sont sélectionnés de sorte que des aires respectives projetées selon un angle de direction de visualisation possèdent des valeurs proportionnelles aux valeurs d'un sous-ensemble de valeurs de réflectance sélectionné parmi un ensemble tabulaire de données fourni de valeurs de réflectance, fabriqué d'un seul tenant sur une base de support (110), en particulier quadrangulaire, ayant une épaisseur constante ($T_0$),
ledit ensemble tabulaire de données comprenant des valeurs de réflectance (r), en particulier des valeurs de réflectance normalisées, de chaussées éclairées par un lampadaire routier (10) émettant une lumière frappant celles-ci au niveau d'un point observé (P), la lumière se propageant à partir du lampadaire routier (10), en particulier à partir d'un centre photométrique (Q) du lampadaire routier (10), le long d'un trajet de lumière (20) de façon à déterminer, tel que vu depuis un point d'observation (O) selon un angle de direction de visualisation donné $\alpha$ par rapport

à la route, en particulier de 1° :

g) un premier angle d'incidence ($\varepsilon$) entre le trajet de lumière (20) et une normale (N) à la chaussée (12) ; et
h) un second angle d'incidence ($\beta$) entre un plan vertical passant par le point d'observation (O) et le point observé (P) et un plan vertical passant par le point observé (P) et le lampadaire routier (20) ;

ledit sous-ensemble de valeurs de réflectance étant sélectionné parmi ledit ensemble tabulaire de données fourni de valeurs de réflectance (r) ; des paramètres géométriques d'un motif (120 ; 120') de formations de type prismoïde (122, 124, 126, 128 ; 122', 124', 126', 128') séparées par des formations de type canal (130) entre elles, dans lequel lesdits paramètres géométriques des formations de type prismoïde (122, 124, 126, 128 ; 122', 124', 126', 128') sont sélectionnés de sorte que des aires respectives projetées selon ledit angle de direction de visualisation possèdent des valeurs proportionnelles aux valeurs dudit sous-ensemble de valeurs de réflectance sélectionné parmi ledit ensemble tabulaire de données fourni de valeurs de réflectance ($\varepsilon$, $\beta$) ;
ledit motif (120 ; 120') de formations de type prismoïde (122, 124, 126, 128 ; 122', 124', 126', 128') séparées par lesdites formations de type canal (123, 125, 127 ; 123', 125', 127') étant fabriqué sur une base de support (110), en particulier quadrangulaire, ayant une épaisseur constante ($T_0$), ladite base de support (110) et ledit motif (120, 120') étant en particulier fabriqués d'un seul tenant.

9. Dispositif (100, 100', 100") selon la revendication 8, le dispositif (70) étant fabriqué (730) à l'aide du procédé selon l'une quelconque des revendications 1 à 7.

10. Kit de matériel de référence configuré pour étalonner un instrument photométrique configuré pour détecter la lumière réfléchie par lesdits revêtements routiers dans des conditions géométriques déterminées (Q, P, O, $\alpha$, $\beta$, $\varepsilon$) d'incidence ($\beta$, $\varepsilon$) de la lumière sur le revêtement routier et de détection ($\alpha$) de ladite lumière réfléchie (12) pour mesurer la luminance d'une chaussée, le kit comprenant au moins un dispositif de référence (100 ; 100' ; 100") selon les revendications 8 ou 9.

11. Kit de matériel de référence selon la revendication 10, comprenant une pluralité desdits dispositifs (100 ; 100' ; 100"), ladite pluralité de dispositifs (100 ; 100' ; 100") étant configurée pour présenter des rapports des aires respectives avec des valeurs proportionnelles aux valeurs de réflectance (r) sélectionnées parmi un ensemble tabulaire de données différent de réflectance ou parmi un sous-ensemble différent d'un ensemble tabulaire de données de réflectance.

FIG. 1

# FIG. 2

EP 3 995 816 B1

EP 3 995 816 B1

# FIG. 3

# FIG. 4

FIG. 5

FIG. 6

FIG. 7

FIG. 8

100"

120    120'

110

FIG. 9

70

700

710

720

730

EP 3 995 816 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10787175 B1

### Non-patent literature cited in the description

- Light and lighting-road lighting. part 3: Calculation of performance. *Technical report, CEN, 2015, EN 13201-3:2015*
- Road lighting - Part 5: Energy performance indicators. *Technical report, CEN, 2015, EN 13201-5:2015*
- Light and lighting-road lighting. Part 2: Performance requirements. *Technical report, CEN, 2015, EN13201-2:2015*
- Road surface and road marking reflection characteristics. *Technical report, CIE 2001, CIE144:2001*
- **P. VERNY ; C. CHAIN ; F. LOPEZ.** Impact of real road photometry on public lighting design. *Proc. Of the CIA 26th Session, Bejing,* 2007
- **GIDLUND, H. ; LINDGREN, M. ; MUZET, V. ; ROSSI, G. ; IACOMUSSI, P.** Road Surface Photometric Characterisation and Its Impact on Energy Savings. *Coatings journal,* 2019
- Recommended system for mesopic photometry based on visual performance. *Technical report, the international commission on Illumination CIE,* 2010, vol. 191, 2011
- The effect of spectral power distribution on lighting for urban and pedestrian areas. *technical report, the international commission on Illumination CIE,* 2014, vol. 206, 2014
- **Y. GUILLARD ; V. MUZET ; JL.PAUMIER.** Coluroute: "A mobile gonioreflectometer to characterize the road surface photometry. *Proceedings of CIE International Symposium on Road Surface Characteristics,* 2007
- **MUZET, V. ; BERNASCONI, J. ; IACOMUSSI, P. ; LIANDRAT, S. ; GREFFIER, F. ; BLATTNER, P. ; REBER, J. ; LINDGREN, M.** Review of road surface photometry methods and devices. *Proposal for new measurement geometries. Lighting Research & Technology,* 2020